(19) Europäisches Patentamt
European Patent Office
Office européen des brevets

(11) **EP 3 429 180 B1**

(12) **EUROPEAN PATENT SPECIFICATION**

(45) Date of publication and mention
of the grant of the patent:
**15.09.2021 Bulletin 2021/37**

(51) Int Cl.:
**H04N 1/60** *(2006.01)*    **G06T 5/10** *(2006.01)*

(21) Application number: **17382462.4**

(22) Date of filing: **14.07.2017**

(54) **METHOD AND SYSTEM FOR COLOR GAMUT MAPPING**

VERFAHREN UND VORRICHTUNG ZUR FARBRAUMABBILDUNG

PROCÉDÉ ET SYSTÈME DE MAPPAGE DE GAMME DE COULEURS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**16.01.2019 Bulletin 2019/03**

(73) Proprietor: **Universitat Pompeu Fabra
08002 Barcelona (ES)**

(72) Inventors:
• **BERTALMÍO BARATE, Marcelo José**
  **08002 Barcelona (ES)**
• **ZAMIR, Syed Waqas**
  **08002 Barcelona (PK)**
• **VÁZQUEZ CORRAL, Javier**
  **08002 Barcelona (ES)**

(74) Representative: **Isern Patentes y Marcas S.L.
Avda. Diagonal, 463 Bis, 2°
08036 Barcelona (ES)**

(56) References cited:
**EP-A1- 2 320 378    US-A1- 2013 093 783
US-B2- 7 573 610**

• **Syed Waqas Zamir ET AL: "The SMPTE Meeting
Presentation Perceptually-based Gamut
Extension Algorithm for Emerging Wide Color
Gamut Display and Projection Technologies
Written for presentation at the Introduction",
Annual Technical Conference and Exhibition,
SMPTE 2016, 19 October 1016 (1016-10-19),
XP055417121, DOI: 10.5594/M001713 ISBN:
978-1-61482-957-7 Retrieved from the Internet:
URL:http://ieeexplore.ieee.org/stampPDF/ge
tPDF.jsp?tp=&arnumber=7819615 [retrieved on
2017-10-19]**

**Description**

**TECHNICAL FIELD OF THE INVENTION**

The present invention relates to a method for mapping the color gamut of a source image to the color gamut of a target device. In particular, the gamut mapping system of the invention deals with both gamut reduction and gamut extension problems.

**BACKGROUND OF THE INVENTION**

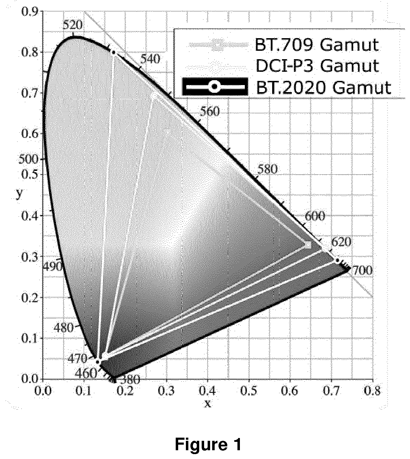

The color gamut of a particular device represents the set of colors this particular device can render. Different display technologies have different gamuts. For example, as shown in Figure 1, TVs work with a gamut called BT. 709 which is narrower than DCI-P3, the gamut used in cinema, which in turn is narrower than BT.2020, the gamut of laser RGB projectors and the next generation of UHDTV sets.

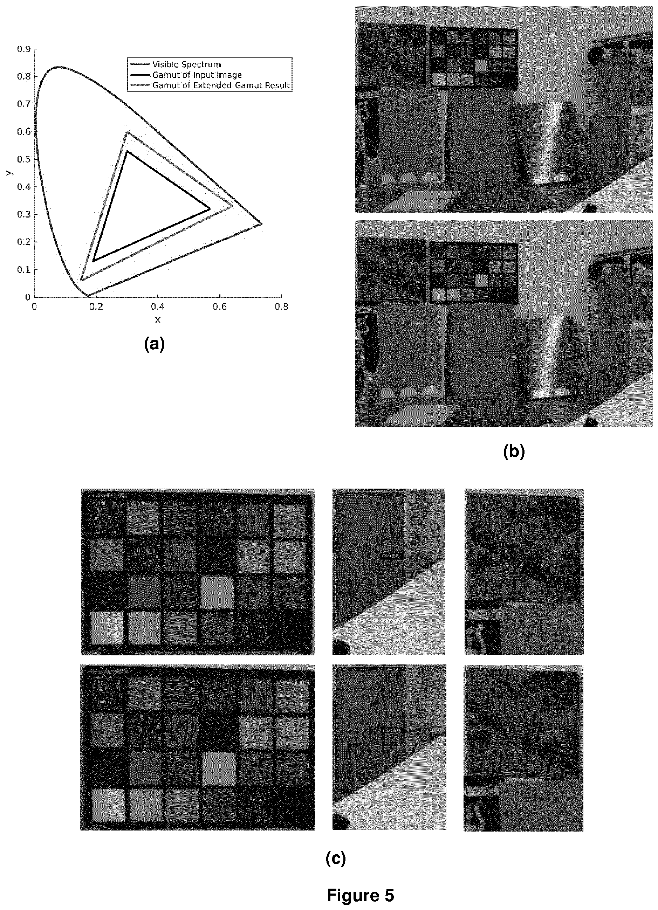

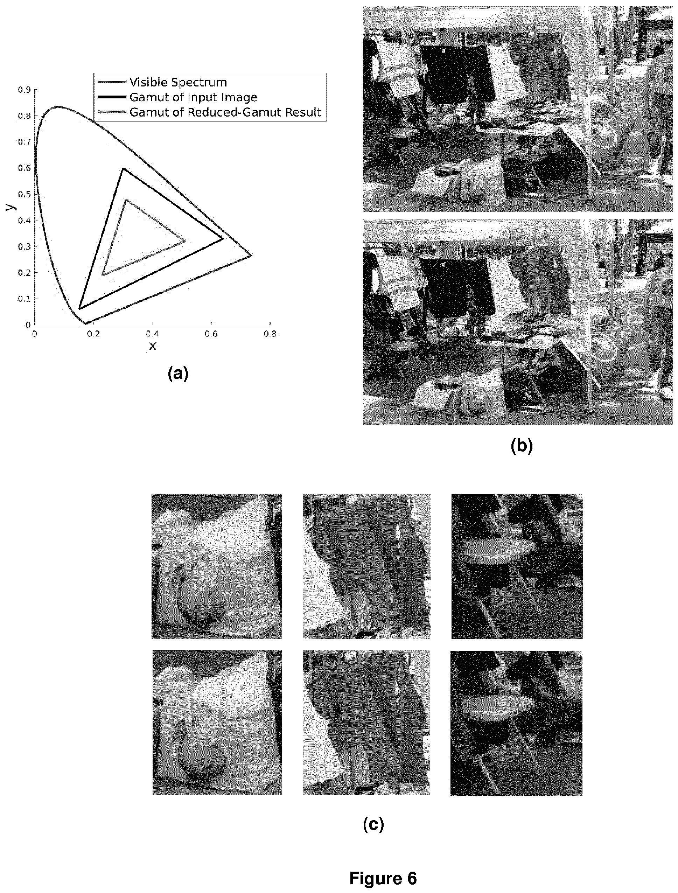

Due to these differences, in many cases the colors present in an original image do not match the range of colors of a particular device where the image is aimed to be shown. Therefore, an automatic procedure called gamut mapping becomes necessary to adapt the colors of the original image to better fit the display color gamut. There exist two possibilities for gamut mapping; i) if the display gamut is larger than that of the image content, the process is called gamut extension, and ii) if the display gamut is smaller than that of the image content, the process is called gamut reduction. See Figures 5 and 6 for an illustration.

Some examples of the use of gamut reduction are for instance digital cameras, since the gamut of their sensors is larger than that of the BT.709/sRGB standard, or professional movies that are post-produced in DCI-P3 standard for cinema viewing, and are later gamut reduced manually for the TV or Blu-ray release.

On the gamut extension side, there is a pressing need for methods allowing to take the full advantage of new cinema laser projectors. Also, new screen technologies like OLED can use gamut extension to improve image appearance (e.g., the newest iPad has a wide gamut close to DCI-P3 while the vast majority of content is still in reduced gamut, BT.709).

Some published patents and patent applications disclosing gamut mapping methods are:

Patent US 6516089 B1: It describes a gamut reproduction system to transform out-of-gamut colors to in-gamut colors. To this end, it performs spatial comparisons that aim to mimic the behavior of the human visual system. It starts performing these spatial comparisons at the smallest multi-resolution image, and then it interpolates the output for the next smaller multi-resolution image where the spatial comparisons are performed again. This process is repeated until the full resolution image is obtained.

Patent US 9025869 B2: It describes a color translation method to map a data point from a first color space to a second color space. This method first divides both color spaces into a plurality of sub-spaces by considering at least four color axes and a plurality of first space reference points and the corresponding second space reference points. Then, for each data point, a target first sub-space where the data point is located is found, and then a corresponding target second sub-space is also found. Finally, according to the position of the data point an interpolation is performed to obtain the value of this particular point in the second sub-space.

Patent US 8265387 B2: It proposes to first apply a standard gamut mapping algorithm to the input color image to obtain a gamut-mapped color image. At this point, the image that provides the channel-wise difference between the input color image and the gamut-mapped image is obtained. From this image, a local measure of complexity is derived. From this local measure, parameter values of a spatial bilateral filter are obtained from a lookup table. This spatial bilateral filter is applied to the difference image. Finally, the result of the bilateral filtering is combined with the gamut-mapped color image to obtain the final result.

Patent US 8437053 B2: It describes a gamut mapping method that involves transforming input color values from an input device color space to an opponent space with good hue-preserving properties. Then, performing gamut mapping in this space by applying a one-dimensional nonlinear transformation to each channel. Finally, the gamut-mapped image is converted back to the original input device color space.

Patent US 7982911 B2: It describes a device that obtains a color conversion coefficient for converting an original image into a second image that represents the first image in a second color space. This coefficient is obtained aaccording to the ratio between different color rendering intents and some evaluation result. The rendering intents are controlled by a graphical user interface.

Patent US 8446961 B2: It describes a method for both gamut reduction and gamut extension. Both are based on a colour triangle transformation via translation, rotation, and scaling. In particular, the result is presented as a combination of baseline and enhancement layers where the baseline layer presents the smallest gamut content (that will be the solution in case of gamut reduction) and the enhancement layer allows the extension of the colors to the wider gamut.

Patent US 8233098 B2: It describes a method where the input image is converted to a chromaticity-lightness plane. Then, for each point of the image, the reproduction color in this plane is such that the absolute difference between the input lightness and the output lightness is a decreasing function of at least the chromaticity and the absolute difference between the input chromaticity and the output chromaticity is an increasing function of at least the chromaticity.

Patent US 9113113 B2: It describes a method of processing a compressed image where a particular gamut mapping method (from a plethora of them) is selected for being applied in each compression block depending on its spatial frequency analysis.

Patent US 7071965 B2: It describes an artistic color gamut display. This gamut display is generated by obtaining maximum and minimum values for an RGB signal. The maximum and minimum values are used as X and Y values for a XY plot. Then, in this plot, a triangular graticule is generated. This triangular graticule has a first side representing Lightness, a second side representing Saturation and a third side representing Value. Also, the area within triangular graticule represents the valid color gamut.

Patent US 7573610 B2: It is a method that separately maps luminance and saturation of the input image to the color gamut of the target device in order to perform both gamut reduction and gamut extension. This gamut mapping framework divides the xy chromaticity diagram into different regions and then the colors of the input image in each region are mapped to target gamut differently. The method applies non-linear functions to control the change of saturation and luminance in order to avoid problems of noise enhancement, over-saturation in gamut extension, and over-desaturation in gamut reduction. In particular, this method produces extended-gamut results that cover the full gamut of the target device. And in the case of gamut reduction, the method modifies all the pixels of the input image (even those that are already inside the target gamut) by using a compression operation.

Patent EP 2320378 A1: It is color enhancement method with a particular application domain of wide-gamut displays. The method is generalized histogram modification procedure that first computes the saturation image channel from the input image and normalize it value. Then a probability distribution is estimated using the normalized saturation values. Next a transfer function based on estimated probability distribution is applied on normalized saturation values in order to modify the contrast and subsequently performing the color enhancement.

In the paper "Perceptually-based gamut extension algorithm for emerging wide gamut display and projection technologies, Zamir et al. SMPTE 2016", an iterative procedure to perform gamut extension is presented. The authors propose to apply a monotonically increasing function on the saturation channel of the input image in HSV color space that allows to increase contrast without decreasing the image saturation values. Additionally, a function is also presented in that paper in order to treat low-saturated and high-saturated pixels differently.

Gamut mapping methods can be divided into global and local methods. Global methods represent the majority of methods that are currently in the literature. They perform a one-to-one mapping in color space to modify the color of the different pixels without considering the context surrounding each pixel. That is, two pixels with the same color will be modified in the same way, regardless of the color distribution of their neighbors, and this is often problematic. Specially in the case of gamut reduction, this one-to-one mapping procedure usually leads to a loss of image details in the case when the method only modifies those colors that are out-of-gamut, because different out-of-gamut pixels will be mapped to the same point; if both in-gamut and out-of-gamut colors are modified, the output may suffer from loss of color saturation.

Local methods, conversely, perform gamut mapping by considering the color information of the surrounding pixels. In general, local methods produce results that are visually more pleasant (although not entirely free from issues), but at the expense of a high computational cost.

The method described in the present invention is local, produces no artifacts and requires a very low computational cost. It is based on retinal and color perception models from vision science that involve very simple linear and non-linear operations, namely convolution with a fixed kernel (following lateral inhibition in the retina) and comparisons/thresholding (following cortical non-linearities that are key in color perception theories). The present method has been validated both by user tests and by image quality metrics, outperforming current state-of-the-art methods.

The present invention can be applied both on photographic and video images and in any environment, that requires image processing, for example, and in a non-limiting manner, cameras, displays, image editing software, printers, etc.

## SUMMARY OF THE INVENTION

The object of the invention is to deal with the problem of gamut mapping, for which there is provided a framework that is capable of performing both gamut reduction and gamut extension.

The present invention takes into account the distribution of colors in the input image while mapping the gamut of the original image to the gamut of the target device. It produces gamut-mapped images that keep as much as possible the spatial information of the original images, and it does not introduce visual artifacts of any kind. The results of gamut mapping methods of the invention outperform the state of the art, as validated through user studies.

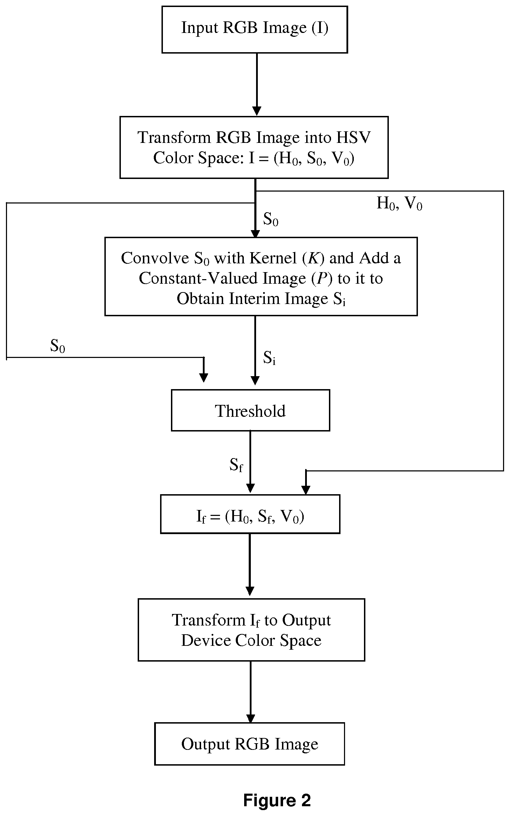

What follows is going to briefly describe the operations involved in modifying the color gamut using the proposed method; more in-depth detail is provided later. As illustrated in Figure 2, the gamut mapping method of this invention is defined in claim 1.

The key elements of this invention, such as working only on the saturation channel and performing a convolution followed by thresholding, are novel in the context of the gamut mapping problem and therefore absent from the academic literature as well as from published and filed patents.

The proposed invention provides, among others, the following advantages:

- There are many methods that deal with the problem of gamut reduction, but the case is very different for the gamut extension problem for which only a few methods exist. Most of these methods for gamut reduction and/or gamut extension are global, i.e. they change image values regardless of their locations in the image. Such methods are fast but prone to issues such as producing artifacts and hue shifts in reproduced images. Apart from global methods, there is another class of gamut mapping methods that change image values by taking into account their local neighborhoods; however, these spatial methods are computationally expensive and may report halos. The invention is capable of performing both gamut reduction and gamut extension without introducing any visual artifacts in the reproduced image, and it is also very fast.

- Unlike other works, the invention adapts itself according to the spatial color distribution of each input image and produces results that are natural and pleasant in appearance, even for very challenging scenes.

- The methods of this invention are validated in psychophysical experiments in which special equipment (digital cinema projector, large cinema screen, TV screen etc.) and particular ambient conditions (as in a cinema, home and office) were used. Many other works on gamut mapping do not use such special experimental settings for validation.

- The potential applications of the proposed invention are quite vast. The computations involved by this invention are very simple so this method could be implemented on hardware devices (for example, in cameras, displays, printers, etc.) as a software step, without any need to modify the hardware in any way, and it could also be incorporated into software tools or processes, e.g. in image editing tools such as Adobe Photoshop®, in cinema postproduction suites such as Apple Final Cut Pro®, in online photo-sharing platforms such as Instagram or Flicker, etc.

**BRIEF DESCRIPTION OF DRAWINGS**

To complete the description that is being made and with the object of assisting in a better understanding of the characteristics of the invention, in accordance with a preferred example of practical embodiments thereof, accompanying said description as an integral part thereof, is a drawing wherein, by way of illustration and not restrictively, the following has been represented:

Figure 1 shows the CIE chromaticity diagram with different standard color gamuts.
Figure 2 is a block diagram of gamut mapping system of the present invention.
Figure 3 is an example of kernel that can be used to perform gamut extension. (a) Full view of the kernel. (b) Zoomed-in view of the kernel.
Figure 4 is an example of kernel that can be used to perform gamut reduction. (a) Full view of the kernel. (b) Zoomed-in view of the kernel.
Figure 5 illustrates the effect of applying the gamut extension procedure on a given image. (a) Gamuts of input image and reproduced image on CIE chromaticity diagram. (b) Top: input image. Bottom: extended-gamut image. (c) Top: Crops from input image. Bottom: corresponding crops from extended-gamut image.
Figure 6 is intended to show the effect of applying gamut reduction procedure on a given image. (a) Gamuts of input image and reproduced image on CIE chromaticity diagram. (b) Top: input image. Bottom: reduced-gamut image. (c) Top: Crops from input image. Bottom: corresponding crops from reduced-gamut image.

**DETAILED DESCRIPTION OF THE INVENTION**

The present invention may be embodied in other specific devices, system and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope. In the following description, for purposes of explanation, numerous specific details are set forth in order to provide a thorough understanding of the present invention. It will be apparent, however, to one skilled in the art that the present invention may be practiced without these specific details. In other instances, well-known structures and devices are shown in block diagram form in order to avoid unnecessarily obscuring the present invention.

Therefore, the invention deals with the problem of gamut mapping, i.e. mapping colors of a source image to the colors of a target device. In particular, the invented framework is capable of performing both gamut reduction and gamut extension.

Figure 2 illustrates the block diagram of the gamut mapping system that receives as inputs a source image, a source gamut and a target gamut. Both source and target gamuts are received in the form of CIE xy coordinates for red, green and blue primaries, and white points. Some examples of standard color gamuts are illustrated on the CIE xy chromaticity diagram in Figure 1: BT.709 is for HDTV, DCI-P3 for cinema and BT.2020 for UHDTV. The source image may be acquired using a mobile camera, low-end consumer camera, DSLR, professional movie camera, or be synthetically generated. And such an image may be a stored image or an image received in real time.

Therefore, it can be understood that this invention could be adopted simply by adding a software step in the existing image processing pipelines of hardware devices such as digital cameras, displays, printers etc. without any need to modify the hardware in any way and also to software platforms such as movie post-production suites, online photo-sharing platforms, etc. Therefore, the application prospects are potentially quite vast.

The system modifies the color gamut of a source image in HSV color space. HSV, with its components, hue (H), saturation (S) and value (V), is a cylindrical-coordinate representation of RGB color space. In HSV color space, the goal of gamut reduction can be posed as reducing saturation and the goal of gamut extension is related to increasing saturation. Therefore, the proposed system operates only on the saturation component, while keeping constant both hue and value.

Typically, source images are represented in the RGB color space. So, before the gamut is modified using the proposed gamut mapping system, these images need to be transformed into the HSV color space (converting from RGB to HSV is a standard operation, see *e.g.* A.R. Smith, "Color Gamut Transform Pairs", SIGGRAPH Computer Graphics, 1978). It is technically convenient to normalize source image values in the range [0, 1] before applying the RGB to HSV color space conversion. Such normalization, for example, could be done on an 8-bit-per-channel image just by dividing each pixel value by 255.

Once the input RGB image is converted into HSV color space, the following steps are applied only on the saturation channel of the input image $S_0$ in order to modify the color gamut.

First an interim saturation image ($S_i$) is computed by performing convolution of the saturation channel $S_0$ with a kernel ($K$) and adding a constant ($P$) to the result as:

$$S_i = S_0 * K + P$$

In this formula, the symbol * denotes the classical convolution (see more on convolution in Chapter 3 of the book R.C. Gonzalez and R.E. Woods, "Digital Image Processing", Third Edition, Prentice Hall, 2006*), P* is a constant-valued image with all pixel values equal to the product of the mean value of input saturation channel ($S_0$) and the mean value of the said kernel ($K$). Meanwhile the kernel ($K$) in said convolution is computed according to the formula:

$$K = F^{-1} \left[ \frac{1}{c_1 + c_2 F(\omega)} \right]$$

where $F$ is a Fourier transform operation, $\omega$ is a Gaussian kernel with standard deviation $\sigma$ and $c_1$ is a positive constant. In the case of gamut extension $c_2$ is a positive constant, and in the case of gamut reduction $c_2$ is a negative constant.

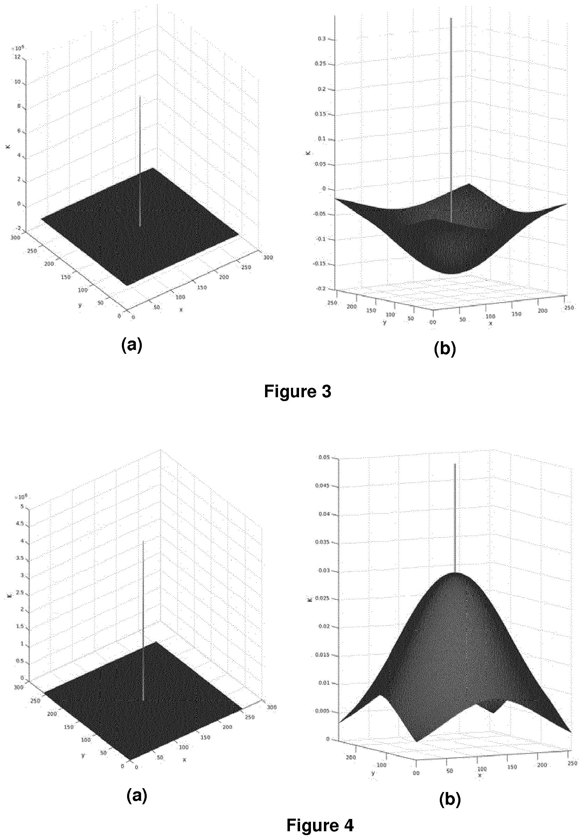

A non-limiting example of the values for constants in the case of gamut extension are $c_1 = 0,62$ and $c_2 = 0.40$, and in the case of gamut reduction are $c_1$ - 1.42 and $c_2$ - -0.40. As a non-limiting example for both gamut extension and gamut reduction, $\sigma$ is equal to the one-third of the number of rows or columns of the input image, whichever is larger. As an example, Figure 3 illustrates the shape of a possible Kernel ($K$) for gamut extension, and Figure 4 shows the shape of a possible Kernel ($K$) for gamut reduction.

Next a threshold operation is applied which is $Sf = max(S_0, S_i)$ in the case of gamut extension (to avoid pixels from getting desaturated), and $Sf = min(S_0, S_i)$ in the case of gamut reduction (to avoid pixels from getting saturated).

The gamut-mapped saturation component ($S_f$) together with input hue ($H_0$) and value ($V_0$) components are transformed back into the target RGB color space. (To convert HSV color space into RGB color space, (see A.R. Smith, "Color Gamut Transform Pairs", SIGGRAPH Computer Graphics, 1978.)

It is important to mention that these aforementioned generic steps (shown in Figure 2) are sufficient to modify the color gamut of an image.

Figure 5 shows an example of extending colors from a smaller source gamut to a larger target gamut by using the gamut extension method of the present invention.

Figure 6 shows an example of mapping colors from a larger source gamut to a smaller target gamut by using the gamut reduction method of the present invention.

However, it can be helpful in improving results for gamut reduction and gamut extension if the following particular (but optional) operations are used.

## Gamut Extension

In gamut extension, certain colors require a special treatment such as skin tones, less saturated natural objects, neutral colors and some particular memory colors. To incorporate such functionality in the main gamut mapping framework (Figure 2), the saturation image $(S_f)$ obtained after threshold operation is linearly combined with the saturation channel of the input image $(S_0)$ as:

$$S_{final} = \tau(S_0)S_0 + (1 - \tau(S_0))S_f$$

where the function $\tau()$ takes as an argument the saturation of the input image $(S_0)$ and associates weights with the pixels of the image in order to treat low-saturated and high-saturated pixels differently, and the said function could be computed with the following formula:

$$\tau(S_0(x)) = 1 - \frac{1}{\left(1 + 0.2e^{-2S_0(x)}\right)^2}$$

where $x$ is the pixel location.

The extended saturation component $S_{final}$ replaces $S_f$ in Figure 2, then passes through the rest of the steps shown in Figure 2.

## Gamut Reduction

When the value of constant $c_2$ is negative in the Kernel $(K)$, then the gamut mapping system of this invention (shown in Figure 2) behaves as a gamut reduction procedure and yields output images with reduced-gamut. However, even better results can be obtained by making the same procedure work in an iterative manner: if out-of-gamut colors remain in the result, the gamut reduction procedure is performed again but now with a kernel $(K)$ where the value of $c_2$ has been decreased (for instance, and in a non-limiting way, the decrement of $c_2$ can be 0.05). This iterative process continues until all pixel colors in the result are in-gamut (with some basic computational geometry one can compute whether a pixel is inside or outside the target gamut; this is a standard operation in the field, and is detailed in Chapter 7 of the book of Jan Morovic, "Color Gamut Mapping", John Wiley & Sons, 2008.)

## Claims

1.  A method for modifying the color gamut of a digital image, the method comprising the following steps performed in an apparatus for processing an image:

    a) receiving a digital image $(I)$;

    b) checking if there is a need of gamut reduction or gamut extension wherein if the target gamut is enclosed by the source gamut, then gamut reduction is needed, and if the source gamut is encompassed by the target gamut, then gamut extension has to be performed;
    c) converting the input image $(I)$ into the HSV color space to obtain the components $H_0$, $S_0$, and $V_0$;
    d) convolving $S_0$ with a kernel $(K)$ and adding a constant-valued image (P) in the result to obtain an interim gamut-mapped image $(S_i)$ as:

    $$S_i = S_0 * K + P$$

    wherein the said kernel $(K)$ is computed as:

    $$K = F^{-1}\left[\frac{1}{c_1 + c_2 F(\omega)}\right]$$

    wherein F is a Fourier transform operation, $\omega$ is a Gaussian kernel with standard deviation equal to the one-third of the number of rows or columns of the input image, whichever is larger; and $c_1$ is a constant and $c_2$ is a positive constant in the case of gamut extension, and $c_2$ is a negative constant in the case of gamut reduction;
    e) applying a threshold operation that is $S_f = max(S_0, S_i)$ in the case of gamut extension and $S_f = min(S_0, S_i)$ in the case of gamut reduction;
    f) converting the HSV image with channels $(H_0, S_f, V_0)$ into the RGB color space of the target device to obtain the final gamut-mapped image.

2.  The method according to claim 1, wherein reducing the color gamut of said digital image $(I)$ involves reducing the value said saturation component *(S)*.

3.  The method according to claim 1, wherein extending the color gamut of said digital image $(I)$ involves increasing the value said saturation component *(S)*.

4.  The method according to claim 1, wherein the said constant $(P)$ in step (d) is a product of the mean value of input saturation channel $(S_0)$ and the mean value of the said kernel $(K)$.

5.  The method according to claim 1, wherein an iterative procedure in terms of reducing the value of $c_2$ in the kernel $(K)$ is computed to improve results for gamut reduction.

6.  The method according to claim 1, wherein a final saturation $S_{final}$, of the extended-gamut result is obtained by linearly combining the saturation component of the intermediate extended-gamut image $S_f$ and the saturation component of the input image $S_0$ using a logistic function $\tau()$ that treats low-saturated high-saturated pixels differently as:

$$S_{final} = \tau(S_0)S_0 + (1 - \tau(S_0))S_f$$

and the final saturation $S_{final}$ replaces $S_f$ in step f) of the claim 1.

7. The method according to claim 6, wherein $\tau()$ is defined as:

$$\tau(S_0(x)) = 1 - \frac{1}{(1 + 0.2e^{-2S_0(x)})^2}$$

wherein x is the pixel location.

8. The method according to claim 1, wherein the digital image (*I*) is in a predetermined color space and the resulting image is in the native color space of the target device.

9. A computer system for modifying the color gamut of a digital image (*I*), the computer system comprising:

   a) means for receiving the said digital image (*I*) and its color gamut;
   b) means for receiving the color gamut of a target device;
   c) means for converting the said image (*I*) into HSV color space: $f = (H_0, S_0, V_0)$;
   d) means for computing a kernel (*K*):

$$K = F^{-1}\left[\frac{1}{c_1 + c_2 F(\omega)}\right]$$

   wherein F is a Fourier transform operation, $\omega$ is a Gaussian kernel with standard deviation equal to the one-third of the number of rows or columns of the input image, whichever is larger; and $c_1$ is a constant and $c_2$ is a positive constant in the case of gamut extension, and $c_2$ is a negative constant in the case of gamut reduction;
   e) means for convolving the said saturation channel $S_u$ with the said kernel (*K*) and adding a constant-valued image to the result to obtain an interim gamut-mapped image $S_i$;
   f) means for computing threshold operation, which is $S_f = max(S_0, S_1)$ in the case of gamut extension and $S_f = min(S_0, S_1)$ in the case of gamut reduction;
   g) means for converting HSV image, where $H =$

$H_0$, $S = S_f$, and $V = V_0$, into RGB color space of the target device and obtaining final gamut-mapped image.

10. A digital data storage medium storing a computer program comprising computer-executable instructions for performing the method according to any of the claims 1-8, when the program is to run on a computer.

**Patentansprüche**

1. Verfahren zum Modifizieren der Farbskala eines digitalen Bildes, wobei das Verfahren die folgenden Schritte umfasst, die in einer Einrichtung zum Verarbeiten eines Bildes durchgeführt werden:

   a) Empfangen eines digitalen Bildes (*I*);
   b) Überprüfen, ob eine Farbskalenreduzierung oder Farbskalenerweiterung erforderlich ist, wobei, wenn die Zielfarbskala von der Quellfarbskala umschlossen ist, dann eine Farbskalenreduzierung erforderlich ist, und wenn die Quellfarbskala von der Zielfarbskala eingeschlossen ist, dann die Farbskalenerweiterung durchgeführt werden muss;
   c) Konvertieren des Eingabebildes (*I*) in die HSV-Farbskala, um die Komponenten $H_0$, $S_0$ und $V_0$ zu erhalten;
   d) Falten von $S_0$ mit einem Kernel (*K*) und Hinzufügen eines Bildes mit konstantem Wert (P) zum Ergebnis, um ein vorläufiges Bild mit Farbskalenabbildung ($S_i$) wie folgt zu erhalten:

$$S_t = S_0 * K + P$$

   wobei der Kernel (K) wie folgt berechnet wird:

$$K = F^{-1}\left[\frac{1}{c_1 + c_2 F(\omega)}\right]$$

   wobei F eine Fourier-Transformationsoperation ist, $\omega$ ein Gaußscher Kernel mit einer Standardabweichung gleich einem Drittel der Anzahl der Zeilen oder Spalten des Eingabebildes ist, je nachdem, was größer ist; und $c_1$ eine Konstante und $c_2$ eine positive Konstante im Fall der Farbskalenerweiterung ist und $c_2$ eine negative Konstante im Fall einer Farbskalenreduzierung ist;
   e) Anwenden einer Schwellenwertoperation, die $S_f = max(S_0, S_i)$ im Fall einer Farbskalenerweiterung ist und $S_f = min(S_0, S_i)$ im Fall einer Farbskalenreduzierung ist;
   f) Konvertieren des HSV-Bildes mit Kanälen ($h_0$, $S_f$, $V_0$) in den RGB-Farbraum der Zielvorrichtung, um das endgültige Bild mit Farbskalenabbildung zu erhalten.

2. Verfahren nach Anspruch 1, wobei das Reduzieren der Farbskala des digitalen Bildes ($I$) das Reduzieren des Wertes der Sättigungskomponente ($S$) beinhaltet.

3. Verfahren nach Anspruch 1, wobei das Erweitern der Farbskala des digitalen Bildes ($I$) das Erhöhen des Wertes der Sättigungskomponente ($S$) beinhaltet.

4. Verfahren nach Anspruch 1, wobei die Konstante ($P$) in Schritt (d) ein Produkt des Mittelwerts des Eingabesättigungskanals ($S_0$) und des Mittelwerts des Kernels ($K$) ist.

5. Verfahren nach Anspruch 1, wobei ein iteratives Verfahren in Bezug auf das Reduzieren des Wertes von $C_2$ im Kernel ($K$) berechnet wird, um die Ergebnisse für die Farbskalenreduzierung zu verbessern.

6. Verfahren nach Anspruch 1, wobei eine endgültige Sättigung $S_{endgültig}$ des Ergebnisses mit erweiterter Farbskala durch lineares Kombinieren der Sättigungskomponente des Zwischenbildes mit erweiterter Farbskala $S_f$ und der Sättigungskomponente des Eingabebildes $S_0$ unter Verwendung einer logistischen Funktion $\tau()$ erhalten wird, die niedrig gesättigte hoch gesättigte Pixel unterschiedlich wie folgt behandelt:

$$S_{endgültig} = \tau(S_0)S_0 + (1 - \tau(S_0))S_f$$

und die endgültige Sättigung $S_{endgültig}$ $S_f$ in Schritt f) von Anspruch 1 ersetzt.

7. Verfahren nach Anspruch 6, wobei $\tau()$ wie folgt definiert ist:

$$\tau(S_0(x)) = 1 - \frac{1}{\left(1 + 0{,}2e^{-2S_0(x)}\right)^2}$$

wobei x die Pixelposition ist.

8. Verfahren nach Anspruch 1, wobei das digitale Bild ($I$) in einem vorbestimmten Farbraum liegt und das resultierende Bild im nativen Farbraum der Zielvorrichtung liegt.

9. Computersystem zum Modifizieren der Farbskala eines digitalen Bildes ($I$), wobei das Computersystem umfasst:

a) Mittel zum Empfangen des digitalen Bildes ($I$) und seiner Farbskala;
b) Mittel zum Empfangen der Farbskala einer Zielvorrichtung;
c) Mittel zum Konvertieren des Bildes ($I$) in den HSV-Farbraum: $I = (H_0, S_0, V_0)$;
d) Mittel zum Berechnen eines Kernels ($K$):

$$K = F^{-1}\left[\frac{1}{c_1 + c_2 F(\omega)}\right]$$

wobei F eine Fourier-Transformationsoperation ist, $\omega$ ein Gaußscher Kernel mit einer Standardabweichung gleich einem Drittel der Anzahl der Zeilen oder Spalten des Eingabebildes ist, je nachdem, was größer ist; und $c_1$ eine Konstante und $c_2$ eine positive Konstante im Fall der Farbskalenerweiterung ist und $c_2$ eine negative Konstante im Fall einer Farbskalenreduzierung ist;
e) Mittel zum Falten des Sättigungskanals So mit dem Kernel ($K$) und Hinzufügen eines Bildes mit konstantem Wert zum Ergebnis, um ein vorläufiges Bild mit Farbskalenabbildung $S_i$ zu erhalten;
f) Mittel zum Berechnen der Schwellenwertoperation, die $S_f$ = max ($S_0$, $S_i$) im Fall einer Farbskalenerweiterung und $S_f$ = min ($S_0$, $S_i$) im Fall einer Farbskalenreduzierung ist;
g) Mittel zum Konvertieren eines HSV-Bildes, wobei $H = H_0$, $S = S_f$ und $V = V_0$ ist, in den RGB-Farbraum der Zielvorrichtung und Erhalten des endgültigen Bildes mit Farbskalenabbildung.

10. Digitales Datenspeichermedium, das ein Computerprogramm speichert, das computerausführbare Anweisungen zum Durchführen des Verfahrens nach einem der Ansprüche 1 bis 8 umfasst, wenn das Programm auf einem Computer laufen soll.

**Revendications**

1. Procédé de modification de la gamme colorimétrique d'une image numérique, le procédé comprenant les étapes suivantes réalisées dans un appareil pour le traitement d'une image :

a) recevoir une image numérique ($I$) ;
b) vérifier s'il existe une nécessité de réduction de gamme ou d'extension de gamme dans lequel si la gamme cible est contenue par la gamme source, alors la réduction de gamme est nécessaire, et si la gamme source est englobée par la gamme cible, alors l'extension de gamme doit être réalisée ;
c) convertir l'image d'entrée ($I$) dans l'espace colorimétrique HSV pour obtenir les compo-

sants $H_0$, $S_0$, et $V_0$;

d) convolutionner $S_0$ avec un noyau ($K$) et en ajoutant une image à valeur constante (P) dans le résultat pour obtenir une image intermédiaire cartographiée dans une gamme ($S_i$) comme :

$$S_t = S_0 * K + P$$

dans lequel ledit noyau ($K$) est calculé comme :

$$K = F^{-1}\left[\frac{1}{c_1 + c_2 F(\omega)}\right]$$

dans lequel F est une opération de transformée de Fourier, $\omega$ est un noyau gaussien à écart-type égal au tiers du nombre de lignes ou de colonnes de l'image d'entrée, le plus grand étant retenu ; et $c_1$ est une constante et $c_2$ est une constante positive dans le cas d'une extension de gamme, et $c_2$ est une constante négative dans le cas d'une réduction de gamme ;

e) appliquer une opération de seuil qui est $S_f = max(S_0, S_i)$ dans le cas d'une extension de gamme et $S_f = min(S_0, S_i)$ dans le cas d'une réduction de gamme ;

f) convertir l'image HSV avec des canaux ($H_0$, $S_f$, $V_0$) dans l'espace colorimétrique RGB du dispositif cible pour obtenir l'image finale cartographiée dans la gamme.

2. Procédé selon la revendication 1, dans lequel la réduction de la gamme colorimétrique de ladite image numérique (*I*) implique de réduire la valeur de ladite composante de saturation (*S*).

3. Procédé selon la revendication 1, dans lequel l'extension de gamme colorimétrique de ladite image numérique (*I*) implique d'augmenter la valeur de ladite composante de saturation (*S*).

4. Procédé selon la revendication 1, dans lequel ladite constante (*P*) à l'étape (d) est un produit de la valeur moyenne de canal de saturation d'entrée ($S_0$) et la valeur moyenne dudit noyau (*K*).

5. Procédé selon la revendication 1, dans lequel une procédure itérative en termes de réduction de la valeur de $C_2$ dans le noyau (*K*) est calculée pour améliorer les résultats de la réduction de gamme.

6. Procédé selon la revendication 1, dans lequel une saturation finale $S_{finale}$ du résultat de gamme étendue est obtenue en combinant linéairement la composante de saturation de l'image intermédiaire à gamme étendue $S_F$ et la composante de saturation de l'image d'entrée So en utilisant une fonction lo-

gistique $\tau()$ qui traite différemment les pixels faiblement saturés et fortement saturés comme :

$$S_{finale} = \tau(S_0)S_0 + (1 - \tau(S_0))S_f$$

et la saturation finale $S_{finale}$ remplace $S_f$ à l'étape f) de la revendication 1.

7. Procédé selon la revendication 6, dans lequel $\tau()$ est défini comme :

$$\tau(S_0(x)) = 1 - \frac{1}{\left(1 + 0{,}2e^{-2S_0(x)}\right)^2}$$

dans lequel x est l'emplacement de pixel.

8. Procédé selon la revendication 1, dans lequel l'image numérique (*I*) est dans un espace colorimétrique prédéterminé et l'image résultante est dans l'espace colorimétrique natif du dispositif cible.

9. Système informatique pour modifier la gamme colorimétrique d'une image numérique (*I*), le système informatique comprenant :

a) des moyens de réception de ladite image numérique (*I*) et de sa gamme colorimétrique ;

b) des moyens de réception de la gamme colorimétrique d'un dispositif cible ;

c) des moyens de conversion de ladite image (*I*) dans l'espace colorimétrique HSV : $I = (H_0, S_0, V_0)$ ;

d) des moyens de calcul d'un noyau (*K*) :

$$K = F^{-1}\left[\frac{1}{c_1 + c_2 F(\omega)}\right]$$

dans lequel F est une opération de transformée de Fourier, $\omega$ est un noyau gaussien à écart-type égal au tiers du nombre de lignes ou de colonnes de l'image d'entrée, le plus grand étant retenu ; et $c_1$ est une constante et $c_2$ est une constante positive dans le cas d'une extension de gamme, et $c_2$ est une constante négative dans le cas d'une réduction de gamme ;

e) des moyens de convolution dudit canal de saturation $S_0$ avec ledit noyau (*K*) et d'ajout d'une image à valeur constante au résultat pour obtenir une image intermédiaire cartographiée dans la gamme $S_i$ ;

f) des moyens de calcul d'opération de seuil, qui est $S_f = max S_0, S_i)$ dans le cas d'une extension de gamme et $S_f = min(S_0, S_i)$ dans le cas d'une réduction de gamme ;

g) des moyens de conversion d'image HSV, où $H = H_0$, $S = S_f$ et $V = V_0$, dans l'espace colorimétrique RVB du dispositif cible et d'obtention de l'image finale cartographiée dans la gamme.

10. Moyen de stockage de données numériques stockant un programme informatique comprenant des instructions exécutables par ordinateur pour réaliser le procédé selon l'une quelconque des revendications 1 à 8, lorsque le programme doit être lancé sur un ordinateur.

**Figure 1**

Input RGB Image (I)

Transform RGB Image into HSV
Color Space: I = (H$_0$, S$_0$, V$_0$)

H$_0$, V$_0$

S$_0$

Convolve S$_0$ with Kernel (*K*) and Add a
Constant-Valued Image (*P*) to it to
Obtain Interim Image S$_i$

S$_0$

S$_i$

Threshold

S$_f$

I$_f$ = (H$_0$, S$_f$, V$_0$)

Transform I$_f$ to Output
Device Color Space

Output RGB Image

**Figure 2**

(a)

(b)

**Figure 3**

(a)

(b)

**Figure 4**

(a)

(b)

(c)

Figure 5

(a)

(b)

(c)

**Figure 6**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6516089 B1
- US 9025869 B2
- US 8265387 B2
- US 8437053 B2
- US 7982911 B2
- US 8446961 B2
- US 8233098 B2
- US 9113113 B2
- US 7071965 B2
- US 7573610 B2
- EP 2320378 A1

**Non-patent literature cited in the description**

- **ZAMIR et al.** Perceptually-based gamut extension algorithm for emerging wide gamut display and projection technologies. SMPTE, 2016
- **A.R. SMITH.** Color Gamut Transform Pairs. *SIGGRAPH Computer Graphics,* 1978
- **R.C. GONZALEZ ; R.E. WOODS.** Digital Image Processing. Prentice Hall, 2006
- **JAN MOROVIC.** Color Gamut Mapping. John Wiley & Sons, 2008